# EUROPEAN PATENT SPECIFICATION

(11) **EP 4 239 857 B1**
(45) Date of publication and mention of the grant of the patent: **19.02.2025**
(21) Application number: 23159238.7
(22) Date of filing: 28.02.2023
(51) Int. Cl.: H02K 1/20, H02K 5/20, H02K 9/193

(54) **ELECTRIC MOTOR FOR VEHICLE, AND VEHICLE**
ELEKTROMOTOR FÜR FAHRZEUG UND FAHRZEUG
MOTEUR ÉLECTRIQUE POUR VÉHICULE ET VÉHICULE

(30) Priority: 02.03.2022 CN 202210198702
(43) Date of publication of application: 06.09.2023
(73) Proprietor: XPT EDS (Hefei) Co., Ltd., Hefei City, Anhui 230601 (CN)
(72) Inventor: LI, Jiqiang, Shanghai (CN); YU, Zhixin, Shanghai (CN); TANG, Zhengyu, Shanghai (CN); XU, Shilong, Shanghai (CN); LI, Jiebao, Shanghai (CN); WANG, Di, Shanghai (CN); BI, Lu, Shanghai (CN); LIU, Huaiyuan, Shanghai (CN); LI, Beibei, Shanghai (CN)
(74) Representative: Vossius & Partner Patentanwälte Rechtsanwälte mbB

(56) References cited:
- WO-A1-2021/217294
- CN-A- 109 936 232
- CN-A- 112 615 445
- CN-A- 113 852 223
- US-A1- 2010 264 760
- US-A1- 2022 045 576

## Description

### Technical Field

The disclosure relates to the technical field of vehicle accessories, and specifically provides an electric motor for a vehicle and a vehicle.

### Background Art

With the rapid development of vehicle technology, related technical requirements for driving electric motors are becoming increasingly stringent, and the future development of electric motors will trend towards high speed, high power density, and high integration. For electric motors, this development trend puts forward higher cooling requirements and requires a more efficient cooling manner.

In existing electric motors for vehicles, a spray oil ring is usually used to spray on an end portion of a winding and an outer surface of an iron core so as to cool the electric motor. For example, published Chinese patent applications CN 112 615 445A, CN 113 852 223A, and CN 109 936 232A each disclose a motor including a stator and an oil cooling structure for the stator, wherein the oil cooling structure includes an oil-spraying member mounted to an axial end of the stator for cooling the end portion of a winding of the stator. In addition, WO 2021/217294 A1 and US 2010/0264760 A1 each disclose an arc-curved oil guide structure fixed to an axial end of a stator.

However, the existing electric motor for vehicles usually have the problems that during spraying and cooling of the outer surface of the iron core, a heat dissipation area of the outer surface of the iron core is small, a convective heat transfer coefficient of a heat dissipation surface is small and is greatly affected by a direction of gravity, and a cooling oil easily flows along an outer wall of a cooling oil ring at a low temperature and a low flow rate, so that the end portion of the winding cannot be cooled.

Accordingly, there is a need in the art for a novel electric motor for a vehicle and a vehicle to solve the foregoing problems.

### Summary

To solve the foregoing problems in the prior art, the invention is set out in the appended set of claims 1-10.

It can be understood by those skilled in the art that in the technical solution of the disclosure, the electric motor for a vehicle comprises a stator, cooling oil rings, and an oil intake pipeline, wherein the cooling oil rings are fixedly connected to the stator; each of the cooling oil rings is a hollow column with a circular ring-shaped cross-section, a side wall of the hollow column is provided with a cooling oil inlet and a plurality of oil spray holes, an inner side wall of the hollow column is further provided with an oil guide rib, and the oil guide rib is configured to be able to guide an oil sprayed from the oil spray holes to one side of the hollow column, so as to enable the cooling oil sprayed from the oil spray holes to fully cool an end portion of the electric motor; the stator comprises a plurality of first laminations, each of the first laminations is configured into the shape of a circular ring and is provided with oil passage holes, the plurality of first laminations are stacked in an axial direction of the first laminations, the plurality of stacked first laminations jointly enclose a cylindrical structure, the oil passage holes in the plurality of first laminations are in communication with each other to form cooling oil passages, and the oil intake pipeline is in communication with the cooling oil passages; and the cooling oil passages are arranged to enable the cooling oil to flow in an axial direction of the stator, and also enable the cooling oil to flow between a plurality of cooling oil passages in a radial direction of the stator; wherein the cooling oil rings are respectively arranged at two ends of the stator, and the oil intake pipeline, the cooling oil passages and the hollow columns are sequentially in communication with one another, so as to enable the cooling oil to flow between the oil intake pipeline, the cooling oil passages, and the hollow columns.

By means of the foregoing arrangement, in the electric motor for a vehicle according to the disclosure, the cooling oil passages in communication with each other are formed, and the oil intake pipeline is in communication with the cooling oil passages, so that the cooling oil can enter the cooling oil passages and flow inside the cooling oil passages in the axial direction of the stator, so as to cool the interior of the stator formed by stacking the plurality of first laminations in the axial direction of the first laminations. Further, in the electric motor for a vehicle according to the disclosure, the cooling oil passages are further arranged to enable the cooling oil to flow in the axial direction of the stator, and also enable the cooling oil to flow between a plurality of cooling oil passages in the radial direction of the stator, so as to increase a flow path of the cooling oil inside the stator. This, compared with a plurality of independent cooling oil passages, further enables the oil temperature to be more balanced, has a better cooling effect, and also provides a longer flow path and more routes, thereby further increasing a heat exchange area inside the stator, and improving the cooling effect on the interior of the stator.

In addition, in the electric motor for a vehicle according to the disclosure, further, the cooling oil rings are arranged at two ends of the stator, the cooling oil rings are each configured as a hollow column with a circular ring-shaped cross-section, the side wall of the hollow column is provided with the cooling oil inlet and the plurality of oil spray holes, and the oil intake pipeline, the cooling oil passages and the hollow columns are sequentially in communication with one another, so as to form a complete oil path in which the cooling oil enters the cooling oil passages from the oil intake pipeline, then flows out from the cooling oil passages and enters each hollow column through the cooling oil inlet, and is then sprayed from the oil spray holes in the side wall of the hollow column under the action of an internal pressure of the hollow column. Therefore, the cooling oil flows in the oil path to provide a spray effect on the end portion of the winding of the electric motor, and then meet requirements for cooling the end portion of the winding of the electric motor by the cooling oil rings. Further, the inner side wall of the hollow column is further provided with an oil guide rib, and the oil guide rib is configured to be able to guide an oil sprayed from the oil spray holes to one side of the hollow column, so as to enable the oil sprayed from the oil spray holes to fully cool the end portion of the electric motor, thereby preventing the cooling oil from flowing along the outer wall of the cooling oil ring, and then further improving the cooling effect of the cooling oil on the end portion of the winding of the electric motor. In addition, the arrangement of the oil guide rib on the inner side wall of the hollow column further enables the cooling oil sprayed from the oil spray holes to flow to the end portion of the winding of the electric motor under the oil guide function of the oil guide rib at a low flow rate or at a low temperature (that is, when the cooling oil is not enough for spraying on the end portion of the winding of the electric motor only under the spray effect of the oil spray holes).

### Brief Description of the Drawings

An electric motor for a vehicle according to the disclosure is described below with reference to the accompanying drawings. In the accompanying drawings:
FIG. 1 is a schematic structural diagram of an internal oil path after cooling oil rings and a stator are assembled;
FIG. 2 is a schematic structural diagram of the assembly of the cooling oil rings and the stator;
FIG. 3 is a schematic structural diagram of a stator formed by stacking a plurality of first laminations;
FIG. 4 is a schematic structural diagram of a cooling oil ring;
FIG. 5 is a schematic structural diagram of an outer ring of the cooling oil ring;
FIG. 6 is a schematic structural diagram of an inner ring of the cooling oil ring;
FIG. 7 is a schematic structural diagram of a cross-section, taken in a direction M-M, of a stacked arrangement of first laminations; and
FIG. 8 is a schematic structural diagram of a cross-section, taken in a direction M-M, of a stacked arrangement in which a second lamination is arranged between two first laminations.

### List of reference signs:

1 - Cooling oil ring; 11 - Hollow column; 111 - Cooling oil inlet; 112 - Oil spray hole; 113 - Oil guide rib; 1131 - Rectangular rib; 114 - First region; 115 - Oil blocking end ring; 116 - Region; 12 - First end; 121 - Axial sealing ring; 13 - Second end; 131 - Radial sealing ring; 14 - Inner ring; 141 - Limiting tooth; 142 - Oil ring fastener; 15 - Outer ring;
2 - Stator; 21 - First lamination; 211 - Oil passage hole; 212 - Cooling oil passage; 213 - Disturbance protrusion; 22 - Second lamination; 221 - Pressure relief hole;
3 - Oil intake pipeline;
4 - Housing.

### Detailed Description of Embodiments

Preferred implementations of the disclosure are described below with reference to the accompanying drawings. Those skilled in the art should understand that these implementations are only used to explain the technical principles of the disclosure, and are not intended to limit the scope of protection of the disclosure. Those skilled in the art can make adjustments according to requirements, so as to adapt to specific application scenarios.

It should be noted that, in the description of the disclosure, the terms that indicate the directions or positional relationships, such as "upper", "lower", "inner" and "outer", are based on the directions or positional relationships shown in the accompanying drawings, are merely for ease of description instead of indicating or implying that the device or element must have a particular orientation and be constructed and operated in a particular orientation, and therefore, should not be construed as limiting the disclosure. In addition, the terms "first" and "second" are used for descriptive purposes only, and cannot be construed as indicating or implying relative importance.

In addition, it should also be noted that, in the description of the disclosure, the terms "connect" should be interpreted in a broad sense unless explicitly defined and limited otherwise, which, for example, may be a fixed connection, a detachable connection or an integral connection; or may be a direct connection, or an indirect connection by means of an intermediate medium. For those skilled in the art, the specific meanings of the foregoing terms in the disclosure can be interpreted according to a specific situation.

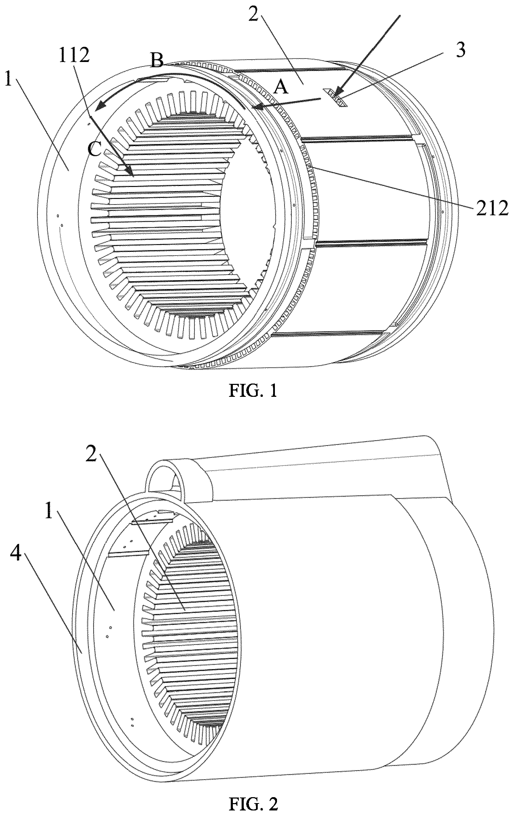

Referring to FIGS. 1 to 4 and 7 first, an electric motor for a vehicle according to the disclosure is described.

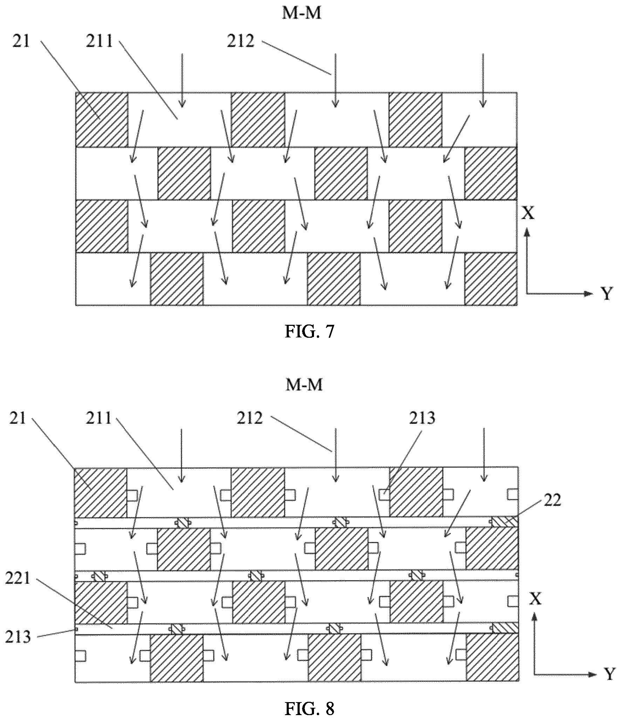

As shown in FIGS. 1 to 4 and 7, to solve the problems usually existing in an existing electric motor for a vehicle that during spraying and cooling of an outer surface of an iron core, a heat dissipation area of the outer surface of the iron core is small, a convective heat transfer coefficient of a heat dissipation surface is small and is greatly affected by a direction of gravity, and a cooling oil easily flows along an outer wall of a cooling oil ring at a low temperature and a low flow rate, so that an end portion of a winding cannot be cooled, an electric motor for a vehicle according to the disclosure comprises a stator 2, cooling oil rings 1, and an oil intake pipeline 3. The cooling oil rings 1 are fixedly connected to the stator 2. Each of the cooling oil rings 1 is a hollow column 11 with a circular ring-shaped cross-section, a side wall of the hollow column 11 is provided with a cooling oil inlet 111 and a plurality of oil spray holes 112, an inner side wall of the hollow column 11 is further provided with an oil guide rib 113, and the oil guide rib 113 is configured to be able to guide an oil sprayed from the oil spray holes 112 to one side of the hollow column 11, so as to enable the cooling oil sprayed from the oil spray holes 112 to fully cool an end portion of the electric motor. The stator 2 comprises a plurality of first laminations 21, each of the first laminations 21 is configured into the shape of a circular ring, the first laminations 21 are provided with oil passage holes 211, the plurality of first laminations 21 are stacked in an axial direction of the first laminations 21, the plurality of stacked first laminations 21 jointly enclose a cylindrical structure, the oil passage holes 211 in the plurality of first laminations 21 are in communication with each other to form cooling oil passages 212, and the oil intake pipeline 3 is in communication with the cooling oil passages 212. The cooling oil passages 212 are arranged to enable the cooling oil to flow in an axial direction of the stator 2, and also enable the cooling oil to flow between a plurality of cooling oil passages 212 in a radial direction of the stator 2 (as shown in FIG. 7, the cooling oil flows axially in an X direction, and a plurality of cooling oil passages 212 are in communication with each other in a Y direction, so the cooling oil also flows radially in the Y direction). The cooling oil rings 1 are respectively arranged at two ends of the stator 2, and the oil intake pipeline 3, the cooling oil passages 212 and the hollow columns 11 are sequentially in communication with one another, so as to enable the cooling oil to flow between the oil intake pipeline 3, the cooling oil passages 212, and the hollow columns 11.

By means of the foregoing arrangement, in the electric motor for a vehicle according to the disclosure, the cooling oil passages 212 in communication with each other are formed, and the oil intake pipeline 3 is in communication with the cooling oil passages 212, so that the cooling oil can enter the cooling oil passages 212 and flow inside the cooling oil passages 212 in the axial direction of the stator 2, so as to cool the interior of the stator 2 formed by stacking the plurality of first laminations 21 in the axial direction of the first laminations 21. Further, in the electric motor for a vehicle according to the disclosure, the cooling oil passages 212 are further arranged to enable the cooling oil to flow in the axial direction of the stator 2, and also enable the cooling oil to flow between a plurality of cooling oil passages 212 in the radial direction of the stator 2, so as to increase a flow path of the cooling oil inside the stator 2. This, compared with a plurality of independent cooling oil passages, further enables the oil temperature to be more balanced, has a better cooling effect, and also provides a longer flow path and more routes, thereby further increasing a heat exchange area inside the stator 2, and improving the cooling effect on the interior of the stator 2.

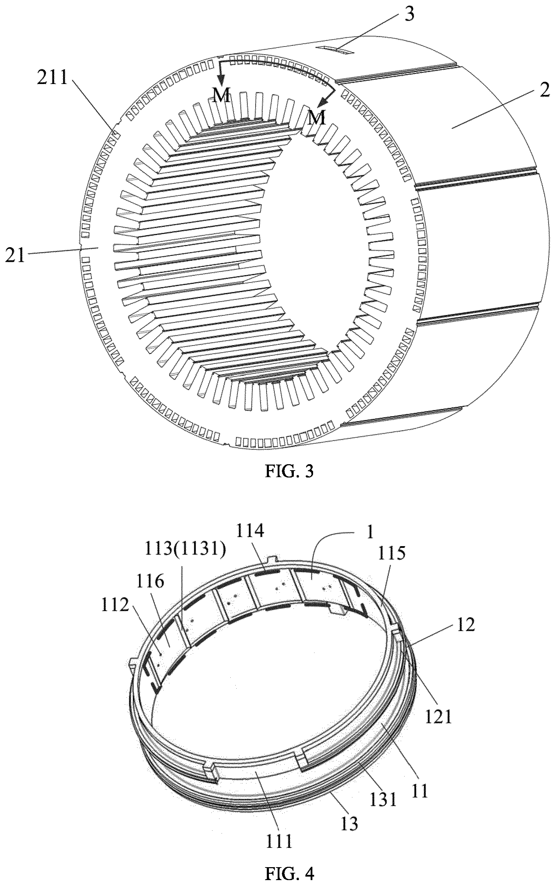

In addition, still referring to FIGS. 1 and 4, in the electric motor for a vehicle according to the disclosure, further, the cooling oil rings 1 are arranged at two ends of the stator 2, the cooling oil rings 1 are each configured as a hollow column 11 with a circular ring-shaped cross-section, the side wall of the hollow column 11 is provided with the cooling oil inlet 111 and the plurality of oil spray holes 112, and the oil intake pipeline 3, the cooling oil passages 212 and the hollow columns 11 are sequentially in communication with one another, so as to form a complete oil path in which the cooling oil enters the cooling oil passages 212 from the oil intake pipeline 3, then flows out from the cooling oil passages 212 and enters each hollow column 11 through the cooling oil inlet 111, and is then sprayed from the oil spray holes 112 in the side wall of the hollow column 11 under the action of an internal pressure of the hollow column 11, in a direction shown by the arrows in FIG. 1. Therefore, the cooling oil flows in the oil path to provide a spray effect on the end portion of the winding of the electric motor, and then meet requirements for cooling the end portion of the winding of the electric motor by the cooling oil rings 1. Further, the inner side wall of the hollow column 11 is further provided with an oil guide rib 113, and the oil guide rib 113 is configured to be able to guide an oil sprayed from the oil spray holes 112 to one side of the hollow column 11, so as to enable the oil sprayed from the oil spray holes 112 to fully cool the end portion of the electric motor, thereby preventing the cooling oil from flowing along the outer wall of the cooling oil ring 1, and then further improving the cooling effect of the cooling oil on the end portion of the winding of the electric motor. In addition, the arrangement of the oil guide rib 113 on the inner side wall of the hollow column 11 further enables the cooling oil sprayed from the oil spray holes 112 to flow to the end portion of the winding of the electric motor under the oil guide function of the oil guide rib 113 at a low flow rate or at a low temperature (that is, when the cooling oil is not enough for spraying on the end portion of the winding of the electric motor only under the spray effect of the oil spray holes 112).

It should be noted that in this embodiment, a section A of the oil path in FIG. 1 is a flow oil path of the cooling oil in the cooling oil passage 212, a section B of the oil path in FIG. 1 is a flow oil path of the cooling oil in the cooling oil ring 1, and a section C of the oil path in FIG. 1 is a flow oil path of the cooling oil sprayed from the oil spray holes 112. The axial direction of the stator 2 refers to the X direction in FIG. 7, and the radial direction of the stator 2 refers to the Y direction in FIG. 7.

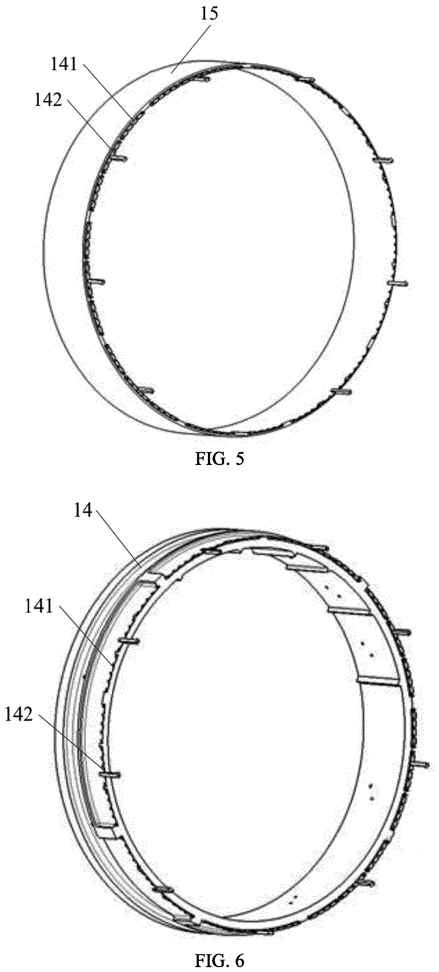

Further referring to FIGS. 1 to 8, the electric motor for a vehicle according to the disclosure is described in detail below.

As shown in FIGS. 4 to 6, in a possible implementation, each of the cooling oil rings 1 comprises an inner ring 14 and an outer ring 15, the outer ring 15 is sleeved outside the inner ring 14, the inner ring 14 and the outer ring 15 are each provided with limiting teeth 141 for mounting with the stator 2 to prevent the cooling oil ring 1 from rotating circumferentially with the stator 2, and the inner ring 14 and the outer ring 15 are each further provided with an oil ring fastener 142 for axially fixedly connecting the cooling oil ring 1 to the stator 2.

In this embodiment, the limiting teeth 141 are provided on both the inner ring 14 and the outer ring 15, so that the circumferential movement between the cooling oil ring 1 and the stator 2 can be prevented after the cooling oil ring 1 is assembled with the stator 2. In addition, the inner ring 14 and the outer ring 15 are each further provided with an oil ring fastener 142, so that the cooling oil ring 1 is axially fixedly connected to the stator 2.

It should be noted that in this embodiment, the outer ring 15 is sleeved outside the inner ring 14 to form the hollow column 11 in this embodiment.

As shown in FIG. 4, in a possible implementation, a plurality of oil guide ribs 113 are provided, each of the oil guide ribs 113 is arranged on the inner side wall of the hollow column 11 in an axial direction of the hollow column 11, the oil guide ribs 113 divide the inner side wall of the hollow column 11 into a plurality of regions 116, and oil spray holes 112 in two adjacent regions 116 are the same in number.

In this embodiment, by providing the plurality of oil guide ribs 113 on the inner side wall of the hollow column 11 in the axial direction of the hollow column 11, the cooling oil sprayed from the oil spray holes 112 can be guided to one side of the hollow column 11 under the action of the oil guide ribs 113, and the oil guide effect on the cooling oil can be further enhanced by providing the plurality of oil guide ribs 113, to further prevent the cooling oil from flowing along the outer wall of the cooling oil ring 1, thereby further improving the spray effect of the cooling oil on the end portion of the electric motor, and then further enhancing the cooling effect on the end portion of the electric motor.

In addition, the cooling oil ring 1 in this embodiment divides the inner side wall of the hollow column 11 into the plurality of regions 116 by means of the oil guide ribs 113, and oil spray holes 112 in two adjacent regions 116 are the same in number, so that the flow rates of the cooling oil flowing through the oil guide ribs 113 in unit time are similar. Therefore, the oil guide efficiency of the oil guide ribs 113 is improved, so that the oil guide ribs 113 can guide the cooling oil to one side of the hollow column 11 more evenly, and then the spray effect on the end portion of the electric motor is improved to enhance the cooling effect on the end portion of the electric motor.

It should be noted that, as shown in FIG. 4, in this embodiment, the oil guide ribs 113 are each a rectangular rib 1131 or a spiral rib (not shown in the figure). The rectangular rib 1131 in the disclosure means an elongated rectangular strip-shaped rib in FIG. 4, and accordingly, the spiral rib is that which reaches one side of the hollow column 11 in the form of a spiral coil on the inner side of the hollow column 11, provided that the cooling oil can be led to the side of the hollow column 11 close to the interior of the electric motor.

As shown in FIG. 4, in order to enhance the spray effect of the cooling oil ring 1 on the end portion of the electric motor, in this embodiment, an arrangement density of oil spray holes 112 in a first region 114 of the inner side wall of the hollow column 11 is greater than those in other regions.

Through the foregoing arrangement, the distribution positions of the oil spray holes 112 are arranged in such a way that the arrangement density in the first region 114 of the inner side wall of the hollow column 11 is greater than those in other regions, so that when the cooling oil rings 1 are assembled with the stator 2, the oil spray holes 112 in the cooling oil rings 1 are distributed in the inner side wall of the hollow column 11 in the form of dense distribution at the top and sparse distribution at the bottom. Therefore, the cooling oil sprayed from the oil spray holes 112 in the first region 114 of the inner side wall of the hollow column 11 can be better sprayed to the end portion of the electric motor under the action of its own gravity, so that more cooling oil can be sprayed to the end portion of the electric motor during the spraying of the cooling oil, thus improving the spray effect of the cooling oil on the end portion of the electric motor, so as to strengthen the cooling effect of the end portion of the electric motor.

As shown in FIGS. 1 and 4, in a possible implementation, a first end 12 of the hollow column 11 is further sleeved with an oil blocking end ring 115.

In this embodiment, the first end 12 of the hollow column 11 is sleeved with the oil blocking end ring 115, so that when the cooling oil rings 1 are assembled with the stator 2 and the cooling oil rings 1 are in communication with the stator 2 via an oil path, the oil blocking end ring 115 can reverse the cooling oil during the flow of the cooling oil in the oil path formed by the stator 2 and the cooling oil rings 1. That is, when the cooling oil flows from the stator 2 into the cooling oil rings 1, the oil blocking end ring 115 sleeved on the cooling oil ring 1 can block the cooling oil to return the cooling oil to change the flow direction of the cooling oil, so that the cooling oil can circulate in the oil path formed by the stator 2 and the cooling oil rings 1, so as to improve the cooling effect on the electric motor stator 2.

As shown in FIGS. 3, 7 and 8, in a possible implementation, the plurality of first laminations 21 are stacked in such a way that oil passage holes 211 in two adjacent first laminations 21 are in a staggered alignment. By way of example, for a plurality of same first laminations 21, it is possible that one lamination at an angle of 0° and one lamination at an angle of rotation of 5° are stacked alternately, or that ten laminations at an angle of 0° and ten laminations at an angle of rotation of 5° are stacked alternately, provided that the cooling oil passages 212 according to any implementation shown in FIGS. 7 and 8 can be finally presented.

It should be noted that in this embodiment, the arrangement positions and the number of oil passage holes 211 in the first laminations 21 may be set according to actual requirements, to meet the design requirements that the cooling oil passages 212 according to any implementation shown in FIGS. 7 and 8 can be presented.

As shown in FIG. 8, in a possible implementation, the stator 2 further comprises a second lamination 22, the second lamination 22 is provided with a pressure relief hole 221, the pressure relief hole 221 has a diameter greater than that of the oil passage hole 211, and at least one second lamination 22 is arranged between two first laminations 21, so that the cooling oil flowing from the oil passage holes 211 located above the second lamination 22 passes through the pressure relief hole 221, and then flows into the oil passage holes 211 located below the second lamination 22.

Through the foregoing arrangement, in the electric motor for a vehicle in this embodiment, further, the second lamination 22 is arranged in the stator 2, the second lamination 22 is provided with a pressure relief hole 221, the pressure relief hole 221 has a diameter greater than that of the oil passage hole 211, and at least one second lamination 22 is arranged between two first laminations 21. Since the pressure relief hole 221 formed in the second lamination 22 has a diameter greater than that of each oil passage hole 211 formed in the first laminations 21, after flowing out of the oil passage holes 211 above the second lamination 22, the cooling oil flows into the pressure relief hole 221 formed in the second lamination 22, so that the pressure is reduced, and then during the flowing of the cooling oil from the pressure relief hole 221 into the oil passage holes 211 below the second lamination 22, the pressure relief hole 221 can relieve the pressure of the cooling oil to enable the cooling oil to flow more smoothly in the cooling oil passages 212. By means of the flow guide function of the pressure relief hole 221, the pressure drop of the cooling oil during the flow is reduced, so as to further improve the cooling effect on the interior of the stator 2 through the flow of the cooling oil in the cooling oil passages 212.

As shown in FIG. 8, in order to further improve the cooling effect on the stator 2, in this embodiment, side walls of the oil passage holes 211 are further provided with disturbance protrusions 213.

In this embodiment, the side walls of the oil passage holes 211 are provided with the disturbance protrusions 213, so that during the flow of the cooling oil in the cooling oil passages 212, a heat dissipation area inside the stator 2 is increased, and the flow disturbance effect of the cooling oil is enhanced, thereby further improving the heat dissipation capability inside the stator 2.

Further, as shown in FIG. 8, in order to further improve the cooling effect on the stator 2, in this embodiment, a side wall of the pressure relief hole 221 is further provided with a disturbance protrusion 213.

Through the foregoing arrangement, in this embodiment, the side wall of the pressure relief hole 221 is provided with the disturbance protrusion 213, so that during the flow of the cooling oil through the pressure relief hole 221, a heat exchange area inside the stator 2 can be further increased under the effect of the disturbance protrusion 213 on the side wall of the pressure relief hole 221, and the disturbance effect of the cooling oil is enhanced, thereby further improving the cooling effect inside the stator 2.

It should be noted that, as shown in FIG. 7, in this embodiment, a cross-section of each oil passage hole 211 is a rectangular hole.

In this embodiment, on the one hand, by configuring the cross-section of the oil passage hole 211 as a rectangular hole, necessary structural features are provided to enable the cooling oil to flow in the cooling oil passages 212, and on the other hand, by configuring the cross-section of the oil passage hole 211 as a rectangular hole, the machining of the oil passage hole 211 is easy to operate, and machining costs are reduced.

As shown in FIG. 2, in a possible implementation, the electric motor further comprises a housing 4, and the housing 4 is sleeved outside the stator 2 and the cooling oil rings 1 such that the stator 2 is fixedly connected to the cooling oil rings 1.

Through the foregoing arrangement, in this embodiment, the housing 4 is sleeved outside the stator 2 and the cooling oil rings 1, so as to meet the requirement of fixedly connecting the stator 2 to the cooling oil rings 1.

As shown in FIGS. 1, 2 and 4, in order to enhance the sealing between each cooling oil ring 1 and the housing 4 of the electric motor, in this embodiment, further, a second end 13 of the cooling oil ring 1 is sleeved with a radial sealing ring 131 for hermetical connection to the housing 4 of the electric motor to achieve a radial sealing effect.

In addition, as shown in FIGS. 1, 2 and 4, in order to enhance the sealing between each cooling oil ring 1 and the stator 2, in this embodiment, further, an axial sealing ring 121 for hermetical connection to the stator 2 axially abuts against the first end 12 of the cooling oil ring 1, and the cooling oil ring 1 is axially pressed against the stator 2 by means of the axial sealing ring 121 to achieve an axial sealing effect.

In conclusion, in the electric motor for a vehicle according to the disclosure, the cooling oil passages 212 are arranged to enable the cooling oil to flow in the axial direction of the stator 2, and also enable the cooling oil to flow between a plurality of cooling oil passages 212 in the radial direction of the stator 2, so as to increase a flow path of the cooling oil inside the stator 2. This, compared with a plurality of independent cooling oil passages, further enables the oil temperature to be more balanced, has a better cooling effect, and also provides a longer flow path and more routes, thereby further increasing a heat exchange area inside the stator 2, and improving the cooling effect on the interior of the stator 2.

In addition, in the electric motor for a vehicle according to the disclosure, further, the cooling oil rings 1 are arranged at two ends of the stator 2, so as to form a complete oil path in which the cooling oil enters the cooling oil passages 212 from the oil intake pipeline 3, then flows out from the cooling oil passages 212 and enters each hollow column 11 through the cooling oil inlet 111, and is then sprayed from the oil spray holes 112 in the side wall of the hollow column 11 under the action of an internal pressure of the hollow column 11. Therefore, the cooling oil flows in the oil path to provide a spray effect on the end portion of the winding of the electric motor, and then meet requirements for cooling the end portion of the winding of the electric motor by the cooling oil rings 1.

It should be noted that the foregoing implementations are only used to explain the principles of the inventions claimed by the appended claims, and are not intended to limit the scope of protection of the claimed inventions. Those skilled in the art can adjust the foregoing structures without departing from the claimed inventions, so that the claimed inventions are applicable to more specific application scenarios.

In addition, the disclosure further provides a vehicle provided with an electric motor for a vehicle according to any one of the foregoing implementations. The technical solutions of the disclosure have been described with reference to the preferred implementations shown in the accompanying drawings. However, those skilled in the art can readily understand that the scope of protection of the claimed inventions is apparently not limited to these specific implementations.

## Claims

1. An electric motor for a vehicle, wherein the electric motor comprises a stator (2), cooling oil rings (1), and an oil intake pipeline (3), wherein the cooling oil rings (1) are fixedly connected to the stator (2);
wherein each of the cooling oil rings (1) is a hollow column (11) with a circular ring-shaped cross-section taken perpendicular to an axial direction of the stator (2);
wherein the stator (2) comprises a plurality of first laminations (21), each of the first laminations (21) is configured into the shape of a circular ring and is provided with oil passage holes (211), the plurality of first laminations (21) are stacked in an axial direction of the stator (2), the plurality of stacked first laminations (21) jointly enclose a cylindrical structure, the oil passage holes (211) in the plurality of first laminations (21) are in communication with each other to form cooling oil passages (212), and the oil intake pipeline (3) is in communication with the cooling oil passages (212);
wherein the cooling oil passages (212) are arranged to enable the cooling oil to flow in an axial direction of the stator (2), and also enable the cooling oil to flow between a plurality of cooling oil passages (212) in a circumferential direction of the stator (2);
wherein the cooling oil rings (1) are respectively arranged at two ends of the stator (2), and the oil intake pipeline (3), the cooling oil passages (212) and the hollow columns (11) are sequentially in communication with one another, so as to enable the cooling oil to flow between the oil intake pipeline (3), the cooling oil passages (212), and the hollow columns (11); and wherein
a side wall of the hollow column (11) in the axial direction of the hollow column (11) is provided with a cooling oil inlet (111),
an inner side wall of the hollow column (11) in the radial direction of the stator (2) is further provided with a plurality of oil spray holes (112) and an oil guide rib (113), and the oil guide rib (113) is configured to be able to guide an oil sprayed from the oil spray holes (112) to one side of the hollow column (11), so as to enable the cooling oil sprayed from the oil spray holes (112) to fully cool an end portion of the electric motor.

2. The electric motor for a vehicle according to claim 1, **characterized in that** each of the cooling oil rings (1) comprises an inner ring (14) and an outer ring (15), the outer ring (15) is sleeved outside the inner ring (14), the inner ring (14) and the outer ring (15) are each provided with limiting teeth (141) for mounting with the stator (2) to prevent the cooling oil ring (1) from rotating circumferentially with the stator (2), and the inner ring (14) and the outer ring (15) are each further provided with an oil ring fastener (142) for axially fixedly connecting the cooling oil ring (1) to the stator (2).

3. The electric motor for a vehicle according to claim 1 or 2, **characterized in that** a plurality of oil guide ribs (113) are provided, each of the oil guide ribs (113) is arranged on the inner side wall of the hollow column (11) in the axial direction of the hollow column (11), the oil guide ribs (113) divide the inner side wall of the hollow column (11) into a plurality of regions (116), and the oil spray holes (112) in two adjacent regions are the same in number.

4. The electric motor for a vehicle according to any of claims 1 to 3, **characterized in that** an arrangement density of oil spray holes (112) in a first region (114) of the inner side wall of the hollow column (11) is greater than those in other regions.

5. The electric motor for a vehicle according to any of claims 1 to 4, **characterized in that** a first end (12) of the hollow column (11) is further sleeved with an oil blocking end ring (115).

6. The electric motor for a vehicle according to any of claims 1 to 5, **characterized in that** the stator (2) further comprises a second lamination (22) provided with a pressure relief hole (221), the pressure relief hole (221) has a diameter greater than that of the oil passage hole (211), and at least one second lamination (22) is arranged between two first laminations (21), so that the cooling oil flowing from the oil passage holes (211) located above the second lamination (22) passes through the pressure relief hole (221), and then flows into the oil passage holes (211) located below the second lamination (22).

7. The electric motor for a vehicle according to claim 6, **characterized in that** side walls of the oil passage holes (211) and/or the pressure relief hole (221) are further provided with disturbance protrusions (213).

8. The electric motor for a vehicle according to any of claims 1 to 7, **characterized in that** the plurality of first laminations (21) are stacked in such a way that oil passage holes (211) in two adjacent first laminations (21) are in a staggered alignment.

9. The electric motor for a vehicle according to any of claims 1 to 8, **characterized in that** the electric motor further comprises a housing (4), and the housing (4) is sleeved outside the stator (2) and the cooling oil rings (1) such that the stator (2) is fixedly connected to the cooling oil rings (1).

10. A vehicle, **characterized by** comprising an electric motor for a vehicle of any one of claims 1 to 9.

## Patentansprüche

1. Elektromotor für ein Fahrzeug, wobei der Elektromotor einen Stator (2), Kühlölringe (1) und eine Öleinlassleitung (3) aufweist, wobei die Kühlölringe (1) fest mit dem Stator (2) verbunden sind;
wobei jeder der Kühlölringe (1) eine hohle Säule (11) mit einem kreisringförmigen Querschnitt ist, genommen senkrecht zu einer axialen Richtung des Stators (2);
wobei der Stator (2) mehrere erste Lamellierungen (21) aufweist, wobei jede der ersten Lamellierungen (21) in der Form eines Kreisrings ausgelegt ist und mit Öldurchgangslöchern (211) versehen ist, wobei die mehreren ersten Lamellierungen (21) in einer axialen Richtung des Stators (2) gestapelt sind, wobei die mehreren gestapelten ersten Lamellierungen (21) zusammen eine zylindrische Struktur einschließen, wobei die Öldurchgangslöcher (211) in den mehreren ersten Lamellierungen (21) miteinander in Verbindung sind, um Kühlöldurchgänge (212) zu bilden, und wobei die Öleinlassleitung (3) in Verbindung mit den Kühlöldurchgängen (212) ist;
wobei die Kühlöldurchgänge (212) angeordnet sind, um dem Kühlöl zu ermöglichen, in einer axialen Richtung des Stators (2) zu strömen, und um dem Kühlöl ebenfalls zu ermöglichen, zwischen mehreren Kühlöldurchgängen (212) in einer umlaufenden Richtung des Stators (2) zu strömen;
wobei die Kühlölringe (1) entsprechend an zwei Enden des Stators (2) angeordnet sind und wobei die Öleinlassleitung (3), die Kühlöldurchgänge (212) und die hohlen Säulen (11) sequenziell in Verbindung miteinander sind, um dem Kühlöl zu ermöglichen, zwischen der Öleinlassleitung (3), den Kühlöldurchgängen (212) und den hohlen Säulen (11) zu strömen, und wobei
eine Seitenwand der hohlen Säule (11) in der axialen Richtung der hohlen Säule (11) mit einem Kühlöleinlass (111) versehen ist,
eine innere Seitenwand der hohlen Säule (11) in der radialen Richtung des Stators (2) ferner mit mehreren Ölsprühlöchern (112) und einer Ölführungsrippe (113) versehen ist und wobei die Ölführungsrippe (113) dazu ausgelegt ist, in der Lage zu sein, ein von den Ölsprühlöchern (112) gesprühtes Öl zu einer Seite der hohlen Säule (11) zu führen, um dem von den Ölsprühlöchern (112) gesprühten Kühlöl zu ermöglichen, einen Endteil des Elektromotors vollständig zu kühlen.

2. Elektromotor für ein Fahrzeug nach Anspruch 1, **dadurch gekennzeichnet, dass** jeder der Kühlölringe (1) einen inneren Ring (14) und einen äußeren Ring (15) aufweist, wobei der äußere Ring (15) über den inneren Ring (14) gezogen ist, wobei der innere Ring (14) und der äußere Ring (15) jeweils mit Begrenzungszähnen (141) zum Montieren mit dem Stator (2) versehen sind, um zu verhindern, dass der Ölkühlring (1) umlaufend mit dem Stator (2) rotiert, und wobei der innere Ring (14) und der äußere Ring (15) jeweils ferner mit einem Ölringbefestigungsmittel (142) zum axial festen Verbinden des Kühlölrings (1) mit dem Stator (2) versehen sind.

3. Elektromotor für ein Fahrzeug nach Anspruch 1 oder **2, dadurch gekennzeichnet, dass** mehrere Ölführungsrippen (113) bereitgestellt sind, wobei jede der Ölführungsrippen (113) an der Innenseite des hohlen Säule (11) in der axialen Richtung der hohlen Säule (11) angeordnet ist, wobei die Ölführungsrippen (113) die innere Seitenwand der hohlen Säule (11) in mehrere Regionen (116) teilen und wobei die Ölsprühlöcher (112) in zwei angrenzenden Regionen der Anzahl nach gleich sind.

4. Elektromotor für ein Fahrzeug nach einem der Ansprüche 1 bis 3, **dadurch gekennzeichnet, dass** eine Anordnungsdichte von Ölsprühlöchern (112) in einer ersten Region (114) der inneren Seitenwand der hohlen Säule (11) größer als die in anderen Regionen ist.

5. Elektromotor für ein Fahrzeug nach einem der Ansprüche 1 bis 4, **dadurch gekennzeichnet, dass** ferner ein Ölblockierendring (115) über ein erstes Ende (12) der hohlen Säule (11) gezogen ist.

6. Elektromotor für ein Fahrzeug nach einem der Ansprüche 1 bis 5, **dadurch gekennzeichnet, dass** der Stator (2) ferner eine zweite Lamellierung (22) aufweist, die mit einem Druckentlastungsloch (221) versehen ist, wobei das Druckentlastungsloch (221) einen Durchmesser aufweist, der größer als der des Öldurchgangslochs (211) ist, und wobei zumindest eine zweite Lamellierung (22) zwischen zwei ersten Lamellierungen (21) angeordnet ist, sodass das Kühlöl, das von den Öldurchgangslöchern (211) strömt, die über der zweiten Lamellierung (22) befindlich sind, durch das Druckentlastungsloch (221) läuft und dann in die Öldurchgangslöcher (211) strömt, die unter der zweiten Lamellierung (22) befindlich sind.

7. Elektromotor für ein Fahrzeug nach Anspruch 6, **dadurch gekennzeichnet, dass** die Seitenwände der Öldurchgangslöcher (211) und/oder des Druckentlastunglochs (221) ferner mit Störvorsprüngen (213) versehen sind.

8. Elektromotor für ein Fahrzeug nach einem der Ansprüche 1 bis 7, **dadurch gekennzeichnet, dass** die mehreren ersten Lamellierungen (21) in einer Weise gestapelt sind, dass Öldurchgangslöcher (211) in zwei angrenzenden ersten Lamellierungen (21) in einer gestuften Ausrichtung sind.

9. Elektromotor für ein Fahrzeug nach einem der Ansprüche 1 bis 8, **dadurch gekennzeichnet, dass** der Elektromotor ferner ein Gehäuse (4) aufweist und das Gehäuse (4) außen über den Stator (2) und die Kühlölringe (1) gezogen ist, sodass der Stator (2) fest mit den Kühlölringen (1) verbunden ist.

10. Fahrzeug, **dadurch gekennzeichnet, dass** es einen Elektromotor für ein Fahrzeug nach einem der Ansprüche 1 bis 9 aufweist.

## Revendications

1. Moteur électrique pour un véhicule, dans lequel le moteur électrique comprend un stator (2), des bagues de lubrification de refroidissement (1), et un tuyau d'admission d'huile (3), dans lequel les bagues de lubrification de refroidissement (1) sont raccordées à demeure au stator (2) ;
dans lequel chacune des bagues de lubrification de refroidissement (1) est une colonne creuse (11) présentant une section transversale circulaire en forme de bague prise perpendiculairement à une direction axiale du stator (2) ;
dans lequel le stator (2) comprend une pluralité de premières stratifications (21), chacune des premières stratifications (21) est conçue en forme de bague circulaire et est dotée de trous de passage d'huile (211), la pluralité de premières stratifications (21) sont empilées dans une direction axiale du stator (2), la pluralité de premières stratifications empilées (21) renferment conjointement une structure cylindrique, les trous de passage d'huile (211) dans la pluralité de premières stratifications (21) sont en communication les uns avec les autres pour former des passages d'huile de refroidissement (212), et le tuyau d'admission d'huile (3) est en communication avec les passages d'huile de refroidissement (212) ;
dans lequel les passages d'huile de refroidissement (212) sont disposés pour permettre à l'huile de refroidissement de s'écouler dans une direction axiale du stator (2), ainsi que pour permettre à l'huile de refroidissement de s'écouler entre une pluralité de passages d'huile de refroidissement (212) dans une direction circonférentielle du stator (2) ;
dans lequel les bagues de lubrification de refroidissement (1) sont respectivement disposées à deux extrémités du stator (2), et le tuyau d'admission d'huile (3), les passages d'huile de refroidissement (212) et les colonnes creuses (11) sont en communication séquentielle les uns avec les autres, de façon à permettre à l'huile de refroidissement de s'écouler entre le tuyau d'admission d'huile (3), les passages d'huile de refroidissement (212) et les colonnes creuses (11) ; et dans lequel
une paroi latérale de la colonne creuse (11) dans la direction axiale de la colonne creuse (11) est dotée d'une entrée d'huile de refroidissement (111),
une paroi latérale interne de la colonne creuse (11) dans la direction radiale du stator (2) est en outre dotée d'une pluralité de trous de pulvérisation d'huile (112) et d'une nervure de guidage d'huile (113), et la nervure de guidage d'huile (113) est conçue pour être en mesure de guider une huile pulvérisée depuis les trous de pulvérisation d'huile (112) vers un côté de la colonne creuse (11), de façon à permettre à l'huile de refroidissement pulvérisée depuis les trous de pulvérisation d'huile (112) de refroidir totalement une partie d'extrémité du moteur électrique.

2. Moteur électrique pour un véhicule selon la revendication 1, **caractérisé en ce que** chacune des bagues de lubrification de refroidissement (1) comprend une bague interne (14) et une bague externe (15), la bague externe (15) est emmanchée à l'extérieur de la bague interne (14), la bague interne (14) et la bague externe (15) sont chacune dotées de dents de limitation (141) pour un montage sur le stator (2) pour empêcher la bague de lubrification de refroidissement (1) de tourner circonférentiellement avec le stator (2), et la bague interne (14) et la bague externe (15) sont chacune en outre dotées d'un dispositif de fixation de bague de lubrification (142) pour raccorder axialement à demeure la bague de lubrification de refroidissement (1) au stator (2).

3. Moteur électrique pour un véhicule selon la revendication 1 ou 2, **caractérisé en ce qu'**une pluralité de nervures de guidage d'huile (113) sont fournies, chacune des nervures de guidage d'huile (113) est disposée sur la paroi latérale interne de la colonne creuse (11) dans la direction axiale de la colonne creuse (11), les nervures de guidage d'huile (113) divisent la paroi latérale interne de la colonne creuse (11) en une pluralité de régions (116), et le nombre de trous de pulvérisation d'huile (112) dans deux régions adjacentes est le même.

4. Moteur électrique pour un véhicule selon l'une quelconque des revendications 1 à 3, **caractérisé en ce qu'**une densité d'agencement de trous de pulvérisation d'huile (112) dans une première région (114) de la paroi latérale interne de la colonne creuse (11) est supérieure à celle d'autres régions.

5. Moteur électrique pour un véhicule selon l'une quelconque des revendications 1 à 4, **caractérisé en ce qu'**une première extrémité (12) de la colonne creuse (11) est en outre emmanchée avec une bague d'extrémité de blocage d'huile (115).

6. Moteur électrique pour un véhicule selon l'une quelconque des revendications 1 à 5, **caractérisé en ce que** le stator (2) comprend en outre une seconde stratification (22) dotée d'un trou limiteur de pression (221), le trou limiteur de pression (221) présente un diamètre supérieur à celui du trou de passage d'huile (211), et au moins une seconde stratification (22) est disposée entre deux premières stratifications (21), de telle sorte que l'huile de refroidissement s'écoulant depuis les trous de passage d'huile (211) situés au-dessus de la seconde stratification (22) passe à travers le trou limiteur de pression (221), puis s'écoule dans les trous de passage d'huile (211) situés sous la seconde stratification (22).

7. Moteur électrique pour un véhicule selon la revendication 6, **caractérisé en ce que** des parois latérales des trous de passage d'huile (211) et/ou du trou limiteur de pression (221) sont en outre dotées de saillies de perturbation (213).

8. Moteur électrique pour un véhicule selon l'une quelconque des revendications 1 à 7, **caractérisé en ce que** la pluralité de premières stratifications (21) sont empilées de telle sorte que des trous de passage d'huile (211) dans deux premières stratifications (21) adjacentes sont empilés en alignement décalé.

9. Moteur électrique pour un véhicule selon l'une quelconque des revendications 1 à 8, **caractérisé en ce que** le moteur électrique comprend en outre un carter (4), et le carter (4) est emmanché à l'extérieur du stator (2) et des bagues de lubrification de refroidissement (1) de telle sorte que le stator (2) est fixé à demeure aux bagues de lubrification de refroidissement (1).

10. Véhicule, **caractérisé en ce qu'**il comprend un moteur électrique pour un véhicule selon l'une quelconque des revendications 1 à 9.
